# EUROPÄISCHE PATENTSCHRIFT

(11) **EP 4 301 562 B1**
(45) Veröffentlichungstag und Bekanntmachung des Hinweises auf die Patenterteilung: **08.04.2026**
(21) Anmeldenummer: 22706799.8
(22) Anmeldetag: 17.02.2022
(51) Int. Cl.: B26D 5/00, G01B 11/00, B65G 54/02, B65G 47/52, B26D 7/30, B65G 17/34, B07C 5/16, B07C 5/28, G01B 1/00, B07C 5/20, B65B 25/06, B25J 11/00, B26D 7/18, B26D 7/32, B65B 9/04, B65B 57/14, B65B 65/00, B65G 57/32

(54) **NAHRUNGSMITTELVERARBEITUNGSANLAGE**
FOOD-PROCESSING SYSTEM
SYSTÈME DE TRAITEMENT D'ALIMENTS

(30) Priorität: 03.03.2021 DE 102021105098
(43) Veröffentlichungstag der Anmeldung: 10.01.2024
(73) Patentinhaber: Provisur Technologies, Inc., Chicago, IL 60601 (US)
(72) Erfinder: GUGGEMOS, Klaus, 87549 Rettenberg (DE); GOROLL, Paul, 87448 Waltenhofen (DE); HINDORFF, Matthias, 87448 Waltenhofen (DE); MAY, Alexander, 87448 Waltenhofen (DE); SCHROFF, Klaus Dieter, 78465 Konstanz (DE); MOHR, Florian, 87477 Sulzberg (DE); BIALY, Jürgen, 25548 Oeschebüttel (DE)
(74) Vertreter: v. Bezold & Partner Patentanwälte - PartG mbB
(86) Internationale Anmeldenummer: PCT/EP2022/053942
(87) Internationale Veröffentlichungsnummer: WO 2022/184454

(56) Entgegenhaltungen:
- EP-A1- 3 028 774
- WO-A1-2015/162182
- WO-A1-2016/071062
- WO-A1-2018/019810
- DE-A1- 102014 116 232
- DE-A1- 102014 118 965
- DE-A1- 102014 118 978
- US-A1- 2004 231 480
- US-A1- 2020 254 641
- N N: "Flying Motion XPlanar", 30 November 2018 (2018-11-30), pages 1 - 28, XP055668904, Retrieved from the Internet <URL:https://download.beckhoff.com/download/Document/catalog/Beckhoff_XPlanar_d.pdf> [retrieved on 20200214]

## Beschreibung

Die Erfindung betrifft eine Nahrungsmittelverarbeitungsanlage zur Verarbeitung von Nahrungsmittelprodukten, insbesondere zum Aufschneiden von Fleischstücken, Käsestücken, Wurst-Stangen oder Salami-Stangen in Scheiben.

Aus dem Stand der Technik sind derartige Nahrungsmittelverarbeitungsanlagen bekannt, die zunächst eine Schneideinrichtung aufweisen, die entsprechend der üblichen Fachterminologie auch als "Slicer" bezeichnet wird und die Nahrungsmittelprodukte (z.B. Fleischstücke, Käsestücke, Wurst-Stangen oder Salami-Stangen) in Scheiben aufschneidet, wobei dann eine oder mehrere der abgeschnittenen Scheiben eine Nahrungsmittelportion bildet.

Darüber hinaus weisen die bekannten Nahrungsmittelverarbeitungsanlagen komplizierte Förderanlagen auf, welche die Nahrungsmittelportionen von der Schneideinrichtung übernehmen und zu einer Verpackungsmaschine (z.B. Tiefzieheinrichtung) transportieren.

Hierbei erfüllt die Förderanlage zwischen der Schneideinrichtung und der Verpackungsmaschine mehrere Funktionen, die nachfolgend kurz beschrieben werden. Beispielsweise kann die Förderanlage mittels eines Pufferförderers die von der Schneideinrichtung angelieferten Nahrungsmittelportionen in einer Pufferzone puffern, so dass hinter der Pufferzone stets eine ausreichende Menge von Nahrungsmittelportionen zur Verfügung steht. Darüber hinaus kann die Förderanlage die Nahrungsmittelportionen mittels sogenannter Shuttle-Förderer in lateraler Richtung quer zu dem Hauptförderweg ausrichten, wobei die Shuttle-Förderer quer zu dem Hauptförderweg verschiebbar sind. Weiterhin besteht die Möglichkeit, dass die Nahrungsmittelportionen umorientiert werden, indem die Nahrungsmittelportionen beispielsweise gedreht werden. Schließlich besteht auch die Möglichkeit einer Produktformatierung, indem beispielsweise eine bestimmte Anzahl von eingangsseitig einlaufenden Förderspuren in eine bestimmte Anzahl von ausgangsseitig auslaufenden Förderspuren umgewandelt wird. Auf diese Weise kann beispielsweise eine dreispurige Schneideinrichtung eine zweispurige Verpackungsmaschine beschicken.

Bei den bekannten Nahrungsmittelverarbeitungsanlagen werden die vorstehend kurz beschriebenen Funktionen durch eine komplizierte Anordnung von Förderbändern realisiert, so dass die bekannten Nahrungsmittelverarbeitungsanlagen relativ kompliziert sind. Im Stand der Technik werden also zur Erfüllung der verschiedenen Funktionen (Puffern, Ausrichten, Umorientieren, Produktformatierung) also Bandförderer eingesetzt, die zur Gruppe der Stetigförderer gehören und relativ kompliziert sind.

Zum technischen Hintergrund der Erfindung ist auch hinzuweisen auf DE 10 2014 118 965 A1, WO 2015/162182 A1, EP 3 028 774 A1, WO 2018/019810 A1, WO 2016/071062 A1, US 2004/231480 A1, US 2020/254641 A1 und den Produktkatalog "Flying Motion: XPlanar" der Fa. Beckhoff Automation GmbH & Co. KG.

Schließlich offenbart DE 10 2014 116 232 A1 eine Nahrungsmittelverarbeitungsanlage gemäß dem Oberbegriff von Anspruch 1. Diese bekannte Nahrungsmittelverarbeitungsanlage ist jedoch noch nicht vollständig befriedigend.

Der Erfindung liegt deshalb die Aufgabe zugrunde, die vorstehend beschriebenen bekannten Nahrungsmittelverarbeitungsanlagen entsprechend zu verbessern.

Diese Aufgabe wird durch eine erfindungsgemäße Nahrungsmittelverarbeitungsanlage gemäß dem Hauptanspruch gelöst.

Die erfindungsgemäße Nahrungsmittelverarbeitungsanlage weist zunächst in Übereinstimmung mit dem Stand der Technik eine Schneideinrichtung ("Slicer") auf, um Nahrungsmittelprodukte in Scheiben aufzuschneiden, die dann Nahrungsmittelportionen bilden. Bei den Nahrungsmittelprodukten kann es sich beispielsweise um Fleischstücke, Käsestücke, Wurst-Stangen oder Salami-Stangen handeln, wie es auch beim Stand der Technik der Fall ist. Weiterhin ist zu erwähnen, dass die aus den abgeschnittenen Scheiben gebildeten Nahrungsmittelportionen jeweils eine oder mehrere der abgeschnittenen Scheiben umfassen. So kann eine Nahrungsmittelportion ein Scheibenstapel sein, der mehrere übereinander gestapelte Scheiben umfasst. Weiterhin besteht im Rahmen der Erfindung die Möglichkeit, dass die einzelnen Nahrungsmittelportionen jeweils Schindeln sind, die aus mehreren übereinandergestapelten Scheiben bestehen, die seitlich zueinander versetzt sind.

Die Erfindung ist jedoch nicht auf die vorstehend beschriebenen Portionsformen beschränkt, sondern auch mit anderen Portionsformen realisierbar (z.B. "Shaved meat", rund gelegt, etc.)

Darüber hinaus weist auch die erfindungsgemäße Nahrungsmittelverarbeitungsanlage eine Förderanlage auf, welche die Nahrungsmittelportionen weg von der Schneideinrichtung transportiert und zwar entlang einem Hauptförderweg. Die Förderanlage erfüllt hierbei ebenfalls mehrere der vorstehend bereits kurz beschriebenen Funktionen (Puffern, Ausrichten, Orientieren, Produktformatierung). Im Gegensatz zu dem eingangs beschriebenen Stand der Technik erfüllt die Förderanlage diese technischen Funktionen jedoch mittels eines Unstetigförderers, der mindestens einen Fördergutträger ("Mover") aufweist, der entlang dem Hauptförderweg bewegbar ist, wobei der Hauptförderweg innerhalb einer Förderfläche frei programmierbar ist. Der im Rahmen der Erfindung verwendete Begriff eines Unstetigförderers unterscheidet die Erfindung entsprechend der üblichen Fachterminologie von Stetigförderern, wie beispielsweise Förderbändern, die bei der eingangs beschriebenen bekannten Nahrungsmittelverarbeitungsanlagen gemäß dem Stand der Technik zum Einsatz kommen. Die erfindungsgemäße Nahrungsmittelverarbeitungsanlage unterscheidet sich also vom Stand der Technik zunächst durch den Typ der Förderanlage (Unstetigförderer anstelle eines Stetigförderers).

Bei dem Unstetigförderer kann es sich beispielsweise um ein Planarmotorantriebssystem handeln, wie es von der deutschen Firma Beckhoff Automation GmbH unter dem Produktnamen "XPlanar" vertrieben wird. Der Unstetigförderer weist also vorzugsweise ein Magnetschwebesystem auf, so dass die einzelnen Fördergutträger berührungslos über der Förderfläche schweben, wobei der Förderweg der einzelnen Fördergutträger individuell für die einzelnen Fördergutträger frei programmierbar ist. Die Bewegung der einzelnen Fördergutträger ist also vorzugsweise nicht an einen festen Förderweg gebunden. Weiterhin ist zu erwähnen, dass der Unstetigförderer vorzugsweise zahlreiche Module umfasst, die vorzugsweise jeweils rechteckig sind und deshalb optional zu einer durchgehenden Förderfläche zusammengesetzt werden können. Dieser modulare Aufbau des Unstetigförderers ermöglicht eine große Flexibilität hinsichtlich der Form der Förderfläche.

Hinsichtlich der Konstruktion und der Funktionsweise der einzelnen Fördergutträger wird auf die deutsche Patentanmeldung DE 10 2020 105 678.8 verwiesen, deren Inhalt der vorliegenden Beschreibung in vollem Umfang zuzurechnen ist. An dieser Stelle ist lediglich zu erwähnen, dass die einzelnen Fördergutträger in ihrer Ladefläche vorzugsweise langgestreckte parallele Vertiefungen aufweisen, in die Fingerförderer eintauchen können, um die auf dem Fördergutträger liegenden Nahrungsmittelportion zu untergreifen und abzufördern, wie noch detailliert beschrieben wird. Hierzu kann der Fördergutträger an seiner Oberseite eine Vielzahl von Stiften aufweisen, die parallel nach oben abstehen und mit ihren freien Stirnflächen die Ladefläche zur Aufnahme der Nahrungsmittelportionen bilden. Die Stifte sind hierbei vorzugsweise matrixförmig in Zeilen und Spalten angeordnet, wobei die Zwischenräume zwischen den Zeilen und auch die Zwischenräume zwischen den Spalten die langgestreckten Vertiefungen bilden, in die die Fingerförderer zum Abfördern der Nahrungsmittelportionen eintauchen können.

Gemäß der Erfindung weist die Nahrungsmittelverarbeitungsanlage zusätzlich eine Prüfstation auf, um die von der Förderanlage geförderten Nahrungsmittelportionen auf die Einhaltung vorgegebener Produktspezifikationen hin zu überprüfen und um Fehlportionen zu ermitteln, die den vorgegebenen Produktspezifikationen nicht genügen. Darüber hinaus ist eine Ausschleusungsstation vorgesehen, die dazu dient, die Fehlportionen aus dem Hauptförderweg auszuschleusen, damit die Fehlportionen nicht zu der Verpackungsmaschine gelangen und auch nicht ohne weiteres an Kunden ausgeliefert werden. Beispielsweise kann die Prüfstation die Nahrungsmittelportionen wiegen und das Gewicht der Nahrungsmittelportionen mit einem vorgegebenen Soll-Gewicht vergleichen, um die Fehlportionen zu ermitteln. Darüber hinaus kann die Prüfstation die Nahrungsmittelportionen auch mit einem Sensor (z.B. Kamera) optisch untersuchen, um Fehlstellen oder Fehlportionen zu erkennen. Bei den Fehlstellen kann es sich beispielsweise um Gewichtsabweichungen, Volumenabweichungen, Formabweichungen oder Qualitätsabweichungen handeln, um nur einige Beispiele zu nennen.

Ferner kann die Nahrungsmittelverarbeitungsanlage auch eine Korrekturzone aufweisen, in der die Fehlportionen korrigiert werden können. So werden die Fehlportionen von der Ausschleusungsstation zunächst in die Korrekturzone ausgeschleust, wo eine Korrektur der Fehlportionen erfolgen kann. Falls beispielsweise eine Nahrungsmittelportion zu wenige Scheiben umfasst, so kann die Nahrungsmittelportion in der Korrekturzone mit einer entsprechenden Anzahl von fehlenden Scheiben komplettiert werden. Diese Korrektur von Fehlportionen kann wahlweise manuell oder automatisch erfolgen. Nach der Korrektur einer Fehlportion kann die korrigierte Fehlportionen dann von der Ausschleusungsstation wieder in den Hauptförderweg eingeschleust werden. Die Ausschleusungsstation kann hierbei von dem Unstetigförderer gebildet werden, da der Förderweg innerhalb der Förderfläche frei programmiert werden kann. Der Unstetigförderer kann also die Fehlportionen wahlweise entlang dem Hauptförderweg in Richtung zu der Verpackungsmaschine transportieren oder im Falle einer Fehlportion zu der Korrekturstation fördern.

Darüber hinaus kann die erfindungsgemäße Förderanlage auch eine Entsorgungsstation aufweisen, um nicht verwertbare Produktreste zu entsorgen. So werden bei einem Schneidvorgang üblicherweise Anfangsstück und Endstücke erzeugt, die nicht verwertbar sind. Diese nicht verwertbaren Produktstücke können dann zunächst auch auf einem Fördergutträger abgelegt werden, der die nicht verwertbaren Produktstücke dann zu der Entsorgungsstation transportiert, wo eine Entsorgung erfolgen kann.

In der Entsorgungsstation werden die nichtverwertbaren Produktstücke (z.B. Anfangsstücke, Endstücke) dann von dem Fördergutträger entfernt. Beispielsweise kann hierzu ein Greifer vorgesehen sein, der das Anfangsstück bzw. Endstück auf dem Fördergutträger ergreift und dann robotergeführt abtransportiert. Alternativ besteht die Möglichkeit eines Saugers, der das nicht verwertbare Anfangsstück bzw. Endstück ansaugt und dann abtransportiert. Eine weitere Möglichkeit zur Entfernung der nicht verwertbaren Produktstücke von dem Fördergutträger besteht in einem Schieber, der die nicht verwertbaren Produktstücke (z.B. Anfangsstück, Endstück) von dem Fördergutträger herunter schiebt. Alternativ besteht die Möglichkeit, dass der komplette Fördergutträger von einer Kippeinrichtung gekippt wird, so dass die nichtverwertbaren Produktstücke von dem Fördergutträger herunterrutschen. Ferner kann auch eine Blaseinrichtung vorgesehen sein, welche die nichtverwertbaren Produktstücke von dem Fördergutträger herunterbläst. Schließlich besteht auch die Möglichkeit, dass die nicht verwertbaren Produktstücke durch ruckartiges Beschleunigen bzw. Abbremsen des Fördergutträgers von dem Fördergutträger entfernt werden.

Es wurde bereits vorstehend erwähnt, dass eine technische Funktion der Förderanlage darin besteht, die Nahrungsmittelportionen entsprechend einer gewünschten Orientierung zu orientieren. Hierzu können die Nahrungsmittelportionen zusammen mit dem Fördergutträger um eine Drehachse gedreht werden, die vorzugsweise rechtwinklig zu der Förderfläche verläuft. Zur Unterstützung dieser Orientierung kann die Förderanlage eine Kamera aufweisen, um die Orientierung der Nahrungsmittelportionen auf den Fördergutträgern zu erfassen. Die einzelnen Fördergutträger werden dann vorzugsweise gedreht, bevor die Produktablage durch die Schneideinrichtung erfolgt, um später ausgangsseitig eine gewünschte Orientierung der Nahrungsmittelportionen auf den einzelnen Fördergutträgern zu erreichen. Falls die Schneideinrichtung die einzelnen Nahrungsmittelportionen also beispielsweise mit einer Fehlorientierung von 10° zum Hauptförderweg ablegt, so werden die einzelnen Fördergutträger bei der Übernahme der Nahrungsmittelportionen von der Schneideinrichtung vorzugsweise um diesen Winkel verdreht. Nach der Übernahme einer Nahrungsmittelportion von der Schneideinrichtung kann der Fördergutträger dann wieder parallel zum Hauptförderweg ausgerichtet sein, wodurch die gewünschte Orientierung hergestellt wird. Diese Umorientierung der Fördergutträger und der darauf befindlichen Nahrungsmittelportionen kann durch den Unstetigförderer erfolgen, so dass hierfür keine zusätzlichen Bauteile erforderlich sind. Beispielsweise können die Fördergutträger mit den darauf befindlichen Nahrungsmittelportionen auch um 90° oder 180° gedreht werden, um die gewünschte Orientierung der Nahrungsmittelportionen zu erreichen, wobei diese Drehung auch ohne eine Kamerakontrolle erfolgen kann.

Weiterhin besteht im Rahmen der Erfindung die Möglichkeit, dass der Unstetigförderer auch beteiligt ist an der Erzeugung von überlappenden Nahrungsmittelportionen. Hierzu ist über der Förderfläche des Unstetigförderers ein Bandförderer angeordnet, der von den Fördergutträgern mit Nahrungsmittelportionen beschickt wird. Ein anderer Fördergutträger wird dann mit einer Nahrungsmittelportion unter den Bandförderer bewegt. Anschließend werden die Nahrungsmittelportionen auf dem Bandförderer einerseits und auf dem Fördergutträger unterhalb des Bandförderers andererseits in Ausgangsrichtung bewegt, wobei der Bandförderer seine Nahrungsmittelportion dann auf der Nahrungsmittelportion auf dem Fördergutträger ablegt und zwar mit einer vorgegebenen Überlappung.

Ferner besteht im Rahmen der Erfindung auch die Möglichkeit, dass die Förderanlage eine Transfereinrichtung aufweist, um Scheiben der Nahrungsmittelportionen zwischen verschiedenen Fördergutträgern zu transferieren. Beispielsweise kann diese Transfereinrichtung einen Bandförderer aufweisen, der eingangsseitig mehrere Fingerförderer oder Messerförderer aufweist, die in die langgestreckten Vertiefungen eines Fördergutträgers eintauchen können, um die dort befindlichen Nahrungsmittelportionen zu untergreifen und abzufördern. Dies ermöglicht die Komplettierung unvollständiger Nahrungsmittelportionen. Falls beispielsweise bei einem Schneidvorgang die Anzahl der abgeschnittenen Scheiben nicht ausreichte, um eine komplette Nahrungsmittelportion mit der gewünschten Anzahl von Scheiben zu erzeugen, so können die fehlenden Scheiben von einem anderen Fördergutträger komplettiert werden.

Darüber hinaus ist zu erwähnen, dass die erfindungsgemäße Nahrungsmittelverarbeitungsanlage eine bestimmte Anzahl von Schneideinrichtungen und eine bestimmte Anzahl von Verpackungsmaschinen aufweisen kann, die nicht gleich sein müssen. Beispielsweise kann eine Schneideinrichtung mehrere Verpackungsmaschinen beschicken. Der Unstetigförderer ermöglicht hierbei eine entsprechende Aufteilung oder Zusammenführung der Produktströme.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine schematische Darstellung einer erfindungsgemäßen Nahrungsmittelverarbeitungsanlage.
Figur 2 zeigt eine Seitenansicht eines Fördergutträgers der Nahrungsmittelverarbeitungsanlage aus Figur 1.
Figur 3 zeigt eine Aufsicht auf den Fördergutträger gemäß Figur 2.
Figur 4 zeigt eine Seitenansicht eines Abnahmeförderers zur Abnahme der Nahrungsmittelportionen von den einzelnen Fördergutträgern.
Figur 5 zeigt eine Seitenansicht eines Abgabeförderers zur Abgabe der Nahrungsmittelportionen auf die einzelnen Fördergutträger.
Figur 6 zeigt eine schematische Darstellung zur Umorientierung der Nahrungsmittelportionen auf den Fördergutträgern.
Figur 7A zeigt eine schematische Aufsicht auf eine erfindungsgemäße Nahrungsmittelverarbeitungsanlage die auch das Überlappen von Nahrungsmittelportionen ermöglicht.
Figur 7B zeigt eine Seitenansicht zu der Nahrungsmittelverarbeitungsanlage gemäß Figur 7A.
Figuren 8A-8F zeigen verschiedene Schritte des erfindungsgemäßen Betriebsverfahrens zum Überlappen von Nahrungsmittelportionen.
Figur 9 zeigt eine schematische Darstellung einer erfindungsgemäßen Nahrungsmittelverarbeitungsanlage, bei der eine Schneideinrichtung zwei Verpackungsmaschinen beschickt.
Figur 10 zeigt eine schematische Darstellung zum Transfer von Scheiben zwischen verschiedenen Fördergutträgern.

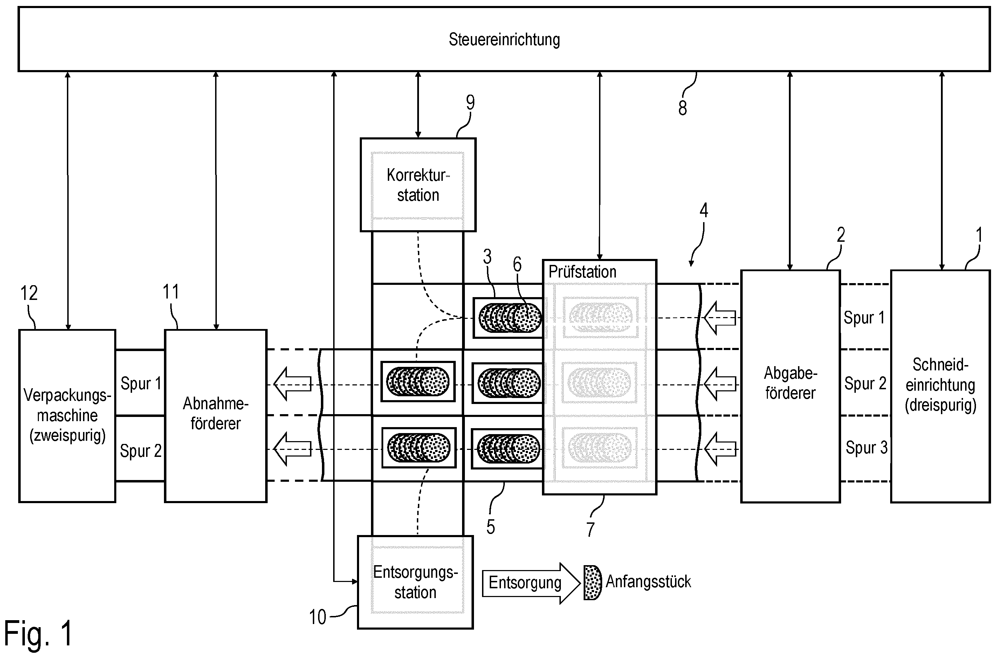

Im Folgenden wird nun das Ausführungsbeispiel einer erfindungsgemäßen Nahrungsmittelverarbeitungsanlage gemäß Figur 1 beschrieben.

Die Nahrungsmittelverarbeitungsanlage weist zunächst eine Schneideinrichtung 1 auf, die entsprechend der üblichen Fachterminologie auch als "Slicer" bezeichnet wird und Nahrungsmittelprodukte (z.B. Käsestücke, Fleischstücke, Salami-Stangen, etc.) in Scheiben aufschneidet. In dem dargestellten Ausführungsbeispiel arbeitet die Schneideinrichtungen dreispurig, d.h. die Nahrungsmittelprodukte werden in drei Spuren nebeneinander aufgeschnittenen.

Darüber hinaus weist die Nahrungsmittelverarbeitungsanlage einen Abgabeförderer 2 auf, der die von der Schneideinrichtung 1 aufgeschnittenen Scheiben aufnimmt und auf Fördergutträgern 3 ("Mover") eines Planarmotorantriebssystems 4 ablegt. Bei dem Planarmotorantriebssystem 4 handelt es sich um das Planarmotorantriebssystem "XPlanar", das von der deutschen Firma Beckhoff Automation GmbH vertrieben wird. Hierbei ist zu erwähnen, dass die Fördergutträger 3 innerhalb einer horizontalen Förderfläche frei bewegt werden können und zwar ohne eine Bindung an einen fest vorgegebenen Förderweg. Die Förderfläche ist hierbei aus zahlreichen rechteckigen Modulen 5 zusammengesetzt, wobei dieser modulare Aufbau des Planarmotorantriebssystems 4 eine große Flexibilität hinsichtlich der Form der Förderfläche ermöglicht.

Der Abgabeförderer 2 liegt hierbei auf jedem der Fördergutträger 3 jeweils eine Nahrungsmittelportion 6 ab, wobei die Nahrungsmittelportionen 6 in dem dargestellten Ausführungsbeispiel jeweils Schindeln aus mehreren Scheiben sind, die versetzt übereinander liegen.

Die Förderfläche des Planarmotorantriebssystems 4 wird hierbei von einer Prüfstation 7 überspannt, die mehrere Kameras enthält, um die Nahrungsmittelportionen 6 auf den Fördergutträgern 3 zu überprüfen. Beispielsweise können die Kameras in der Prüfstation 7 die Anzahl der Scheiben in den einzelnen Nahrungsmittelportionen 6 erfassen und dadurch Fehlportionen mit einer zu geringen Anzahl von Scheiben erkennen. Darüber hinaus können die Kameras in der Prüfstation sieben beispielsweise auch sonstige Fehlstellen (z.B. Fettaugen) in den Nahrungsmittelportionen 6 erkennen.

In der Prüfstation 7 kann auch das Gewicht der Fördergutträger 3 mit den darauf befindlichen Nahrungsmittelportionen 6 gemessen werden. So schweben die Fördergutträger 3 mit den darauf befindlichen Nahrungsmittelportionen 6 im Betrieb über der Förderfläche des Planarmotorantriebssystems 4 und zwar in einem bestimmten Abstand, der von dem Gewicht des Fördergutträgers 3 mit der darauf befindlichen Nahrungsmittelportionen 6 abhängt. Die Breite des Luftspalts zwischen dem Fördergutträger 3 und der Förderfläche des Planarmotorantriebssystems 4 bildet also ein Maß für das Gewicht der Nahrungsmittelportionen 6 auf dem Fördergutträger 3. In der Prüfstation 7 kann deshalb auch die Breite des Luftspalts zwischen dem Fördergutträger 3 und der Förderfläche des Planarmotorantriebssystems 4 als Maß für das Gewicht des beladenen Fördergutträgers 3 gemessen werden. Alternativ besteht die Möglichkeit, dass die Breite des Luftspalts zwischen dem Fördergutträger 3 und der Förderfläche des Planarmotorantriebssystems 4 konstant gehalten wird, indem die Leistung des Planarmotorantriebssystems 4 entsprechend angepasst wird, wobei die Leistung des Planarmotorantriebssystems 4 dann ein Maß für das Gewicht des beladenen Fördergutträgers bildet.

Alternativ besteht jedoch auch die Möglichkeit, dass das Gewicht der Fördergutträger 3 in einer separaten Wiegestation gemessen wird, die zwischen der Förderanlage und der Schneideinrichtung ("Slicer") angeordnet ist.

Die Prüfstation 7 ermittelt also zum einen das Gewicht der Nahrungsmittelportionen 6 auf den Fördergutträgern 3 und untersucht die Nahrungsmittelportionen 6 auch mit den Kameras optisch. Die Prüfstation 7 meldet dann ein entsprechendes Signal an eine übergeordnete Steuereinrichtung 8, die auch die Schneideinrichtung 1 und den Abgabeförderer 2 ansteuert. Falls die Prüfstation 7 ermittelt, dass die Nahrungsmittelportion 6 eine Fehlportion ist, so steuert die Steuereinrichtung 8 das Planarmotorantriebssystem 4 so an, dass der Fördergutträger 3 mit der Nahrungsmittelportion 6 zu einer Korrekturstation 9 ausgeschleust wird. In der Korrekturstation 9 kann die Fehlportionen dann korrigiert werden, indem beispielsweise eine fehlende Scheibe hinzugefügt wird, um nur ein Beispiel zu nennen. Anschließend kann das Planarmotorantriebssystem 4 die korrigierte Fehlportion wieder in den Hauptförderweg einschleusen.

Falls die Prüfung in der Prüfstation 7 dagegen ergibt, dass sich auf einem der Fördergutträger 3 ein nicht verwertbares Anfangsstück oder Endstück befindet, so wird der zugehörige Fördergutträger 3 von dem Planarmotorantriebssystem 4 zu einer Entsorgungsstation 10 transportiert, in der dann die nichtverwertbaren Anfangsstücke bzw. Endstücke von dem Fördergutträger 3 entfernt und entsorgt werden.

Die Fördergutträger 3 mit den darauf befindlichen Nahrungsmittelportionen 6 werden dann von dem Planarmotorantriebssystem 4 zu einem Abnahmeförderer 11 transportiert, der die Nahrungsmittelportionen 6 von dem jeweiligen Fördergutträger 3 abnimmt und in zwei parallelen Spuren zu einer Verpackungsmaschine 12 transportiert.

Die Verpackungsmaschine 1 arbeitet hier bei zweispurig, während die Schneideinrichtung 1 dreispurig arbeitet. Das Planarmotorantriebssystem 4 ermöglicht hierbei also auch eine Spurkonvertierung von drei Eingangsspuren auf zwei Ausgangsspuren.

Weiterhin ist zu erwähnen, dass die Steuereinrichtung 8 nicht nur die Schneideinrichtung 1, das Planarmotorantriebssystems 4 und den Abgabeförderer 2 steuert. Vielmehr ist die Steuereinrichtung 8 auch mit der Prüfstation 7, der Korrekturstation 9, der Entsorgungsstation 10, dem Abnahmeförderer 11 und der Verpackungsmaschine 12 verbunden. Hierbei ist zu erwähnen, dass die Steuereinrichtung 8 zur Vereinfachung als einzelnes Bauteil dargestellt ist. Tatsächlich kann die Steuereinrichtung 8 jedoch auch als verteiltes System mit mehreren Steuerungen realisiert sein, wobei die Steuerung auch teilweise in Hardware und teilweise in Software realisiert sein kann.

Schließlich ist noch zu erwähnen, dass das Planarmotorantriebssystem 4 auch eine Rückführspur aufweisen kann, um leere Fördergutträger 3 zurück zu dem Abgabeförderer 2 zu transportieren. Die Rückführspur ist in der Zeichnung jedoch zur Vereinfachung nicht dargestellt.

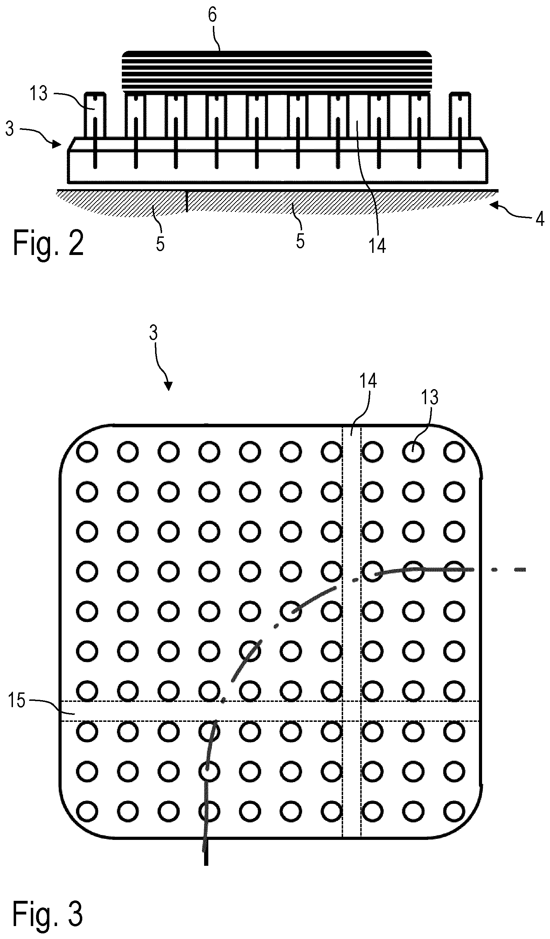

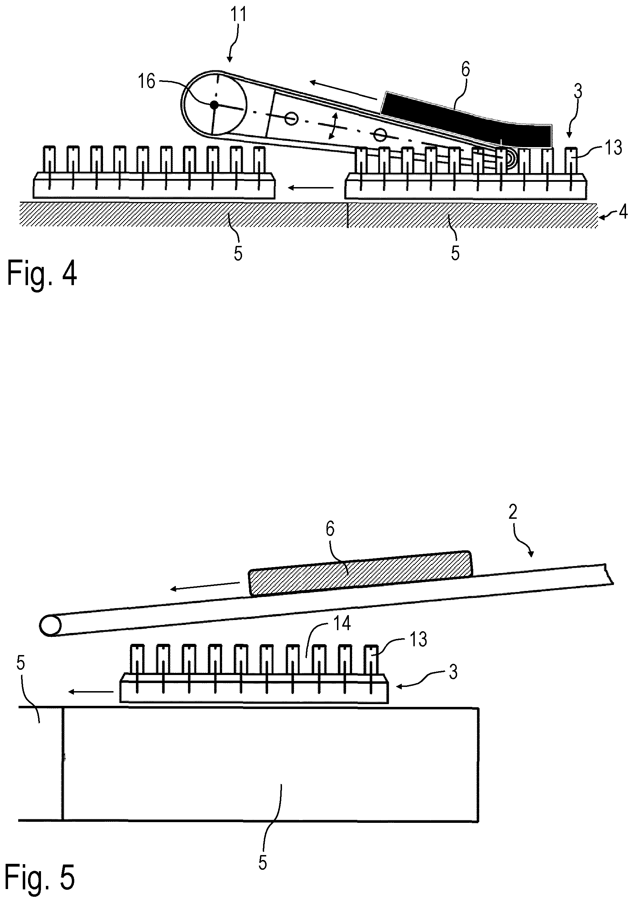

Die Figuren 2 und 3 zeigen verschiedene Ansichten eines der Fördergutträger 3 auf dem Planarmotorantriebssystem 4. Der Aufbau und die Funktionsweise des Fördergutträgers 3 ist auch in der deutschen Patentanmeldung DE 10 2020 105 678.8 beschrieben, deren Inhalt der vorliegenden Beschreibung in vollem Umfang zuzurechnen ist. An dieser Stelle ist lediglich zu erwähnen, dass der Fördergutträger 3 an seiner Oberseite zahlreiche Stifte 13 aufweist, die parallel nach oben abstehen und matrixförmig in Zeilen und Spalten angeordnet sind. Die benachbarten Zeilen und auch die benachbarten Spalten schließen hier bei jeweils langgestreckte Vertiefungen 14, 15 ein, die das Abfördern der Nahrungsmittelportionen 6 von dem Fördergutträger 3 erleichtern, wie noch detailliert beschrieben wird. So zeigt Figur 4 eine Seitenansicht eines der Abnahmeförderer 11, der um eine Schwenkachse 16 schwenkbar sind. Die einzelnen Abnahmeförderer 11 besteht hierbei aus mehreren nebeneinanderliegenden und relativ schmalen Fingerförderern, die in die langgestreckten Vertiefungen 14 bzw. 15 an der Oberseite des Fördergutträgers 3 eintauchen können, um die Nahrungsmittelportionen 6 auf dem Fördergutträger 3 zu untergreifen und abzufördern.

Figur 5 zeigt dagegen eine schematische Darstellung des Abgabeförderer 2, der die Nahrungsmittelportionen 6 auf den einzelnen Fördergutträgern 3 ablegt.

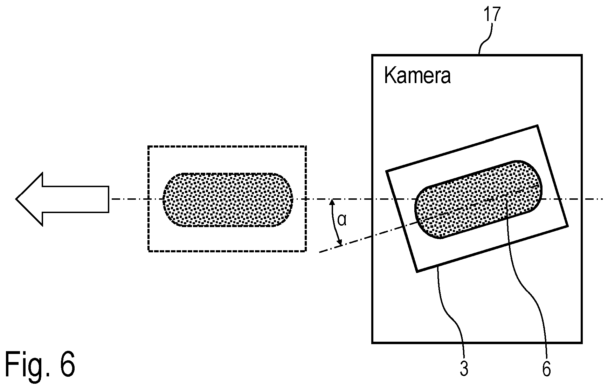

Figur 6 zeigt eine schematische Darstellung zur Erläuterung der Orientierungsfunktion des Planarmotorantriebssystems 4. So kann das Planarmotorantriebssystems 4 die Fördergutträger 3 um ihre Hochachse drehen, damit die Nahrungsmittelportionen 6 auf dem Fördergutträger 3 eine vorgegebene Orientierung aufweisen. Figur 6 zeigt hierbei den Fördergutträger 3 bei der Produktablage der Nahrungsmittelportionen 6 von der Schneideinrichtung 1. So werden die Nahrungsmittelportionen 6 zunächst mit einem Fehlstellungswinkel α relativ zur Hauptfördereinrichtung auf dem Fördergutträger 3 abgelegt, was von einer Kamera 17 erfasst wird. Der Fördergutträger 3 wird deshalb vor der Produktablage der Nahrungsmittelportion 6 auf dem Fördergutträger 3 entsprechend verdreht. Nach der Produktablage der Nahrungsmittelportion 6 auf dem Fördergutträger 3 wird der Fördergutträger 3 dann wieder entsprechend gedreht, wie in der Zeichnung gestrichelt dargestellt ist, wobei die Nahrungsmittelportion 6 dann trotz der anfänglichen Fehlausrichtung bei der Produktablage wieder korrekt ausgerichtet ist.

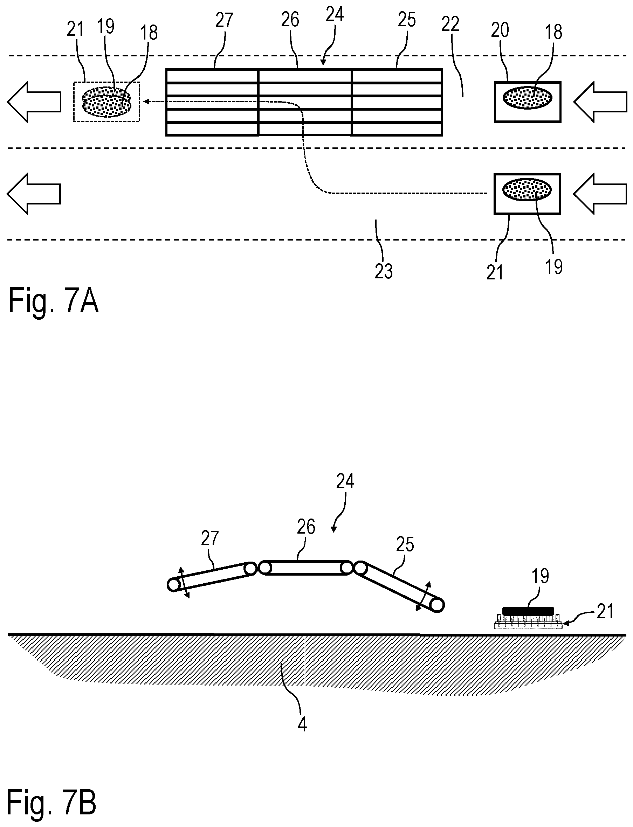

Die Figuren 7A und 7B zeigen verschiedene Ansichten eines alternativen Ausführungsbeispiels einer erfindungsgemäßen Nahrungsmittelverarbeitungsanlage, die auch das Überlappen von Nahrungsmittelportionen 18, 19 ermöglicht. Hierbei werden die Nahrungsmittelportionen 18, 19 auf Fördergutträgern 20, 21 in zwei parallelen Förderspuren 22, 23 angefördert.

In der rechten Förderspur 22 ist hierbei ein Bandförderer 24 angeordnet, der aus einem Abnahmeförderer 25, einen Zwischenförderer 26 und einem Abgabeförderer 27 besteht. Der Abnahmeförderer 25 übernimmt die Nahrungsmittelportionen 18 von dem Fördergutträger 20 und gibt die übernommene Nahrungsmittelportion 18 dann an den Zwischenförderer 26 und an den Abgabeförderer 27 weiter. Der Abgabeförderer 27 legt die Nahrungsmittelportionen 18 dann auf der Nahrungsmittelportion 19 auf dem anderen Fördergutträger 21 ab.

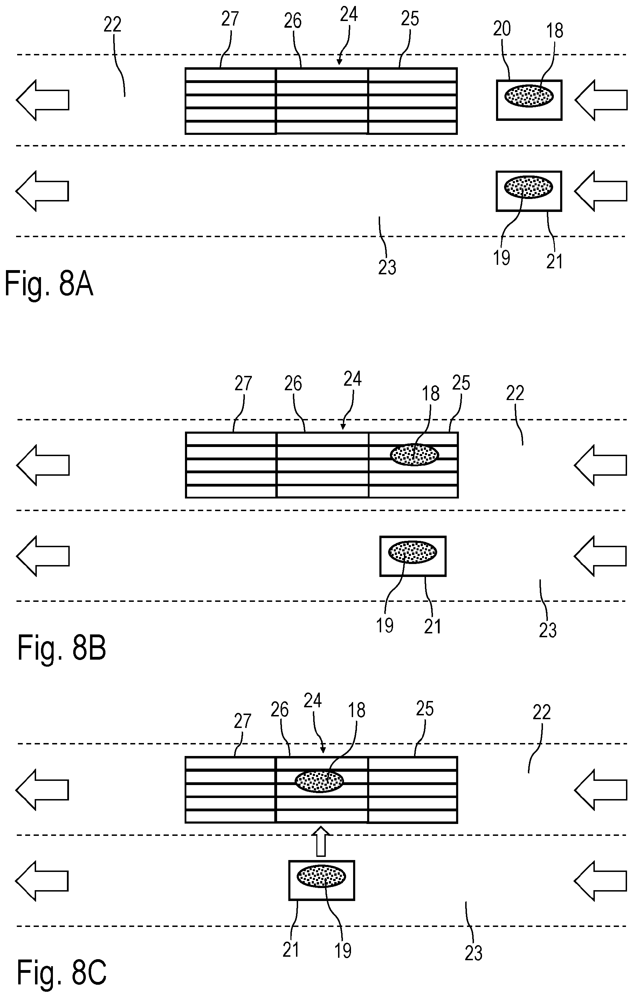

Die Figuren 8A-8F zeigen das Überlappungsverfahren nun in mehreren aufeinanderfolgenden Stadien.

In dem Stadium gemäß Figur 8A werden die beiden Fördergutträger 20, 21 mit den beiden Nahrungsmittelportionen 18, 19 in den beiden Förderspuren 22, 23 angefördert.

In dem Stadium gemäß Figur 8B ist die Nahrungsmittelportion 18 von dem Fördergutträger 22 abgenommen und von dem Abnahmeförderer 25 übernommen. In diesem Stadion bewegt sich der Fördergutträger 21 mit der Nahrungsmittelportion 19 neben dem Bandförderer 24 weiter.

In dem Stadium gemäß Figur 8C hat die Nahrungsmittelportion 18 dann den Zwischenförderer 26 erreicht und der andere Fördergutträger 21 befindet sich seitlich daneben.

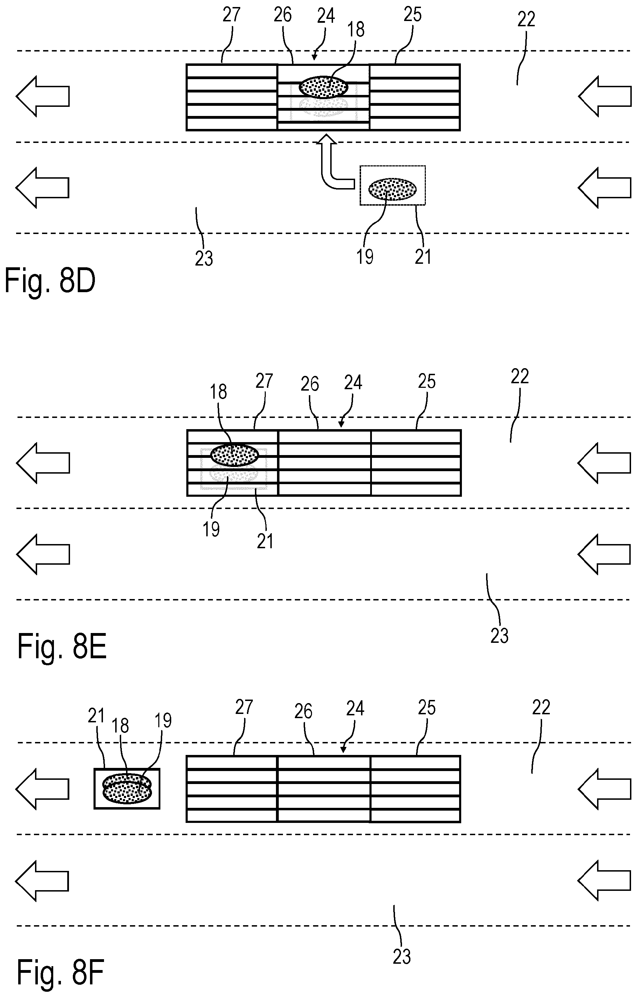

In dem Stadium gemäß Figur 8D befindet sich der Fördergutträger 21 mit der Nahrungsmittelportion 19 dann unterhalb des zwischen Förderers 26.

In dem Stadium gemäß Figur 8E befinden sich die beiden Nahrungsmittelportionen 18, 19 dann übereinander auf dem Abgabeförderer 27 einerseits und darunter auf dem Fördergutträger 21 andererseits.

In Figur 8F ist dann dargestellt, dass der Abgabeförderer 27 die Nahrungsmittelportion 18 auf dem Fördergutträger 21 auf der Nahrungsmittelportion 19 abgelegt hat, wobei die beiden Nahrungsmittelportionen 18, 19 überlappen.

Die dargestellte Anordnung ermöglicht also das überlappende Anordnen der Nahrungsmittelportionen 18, 19.

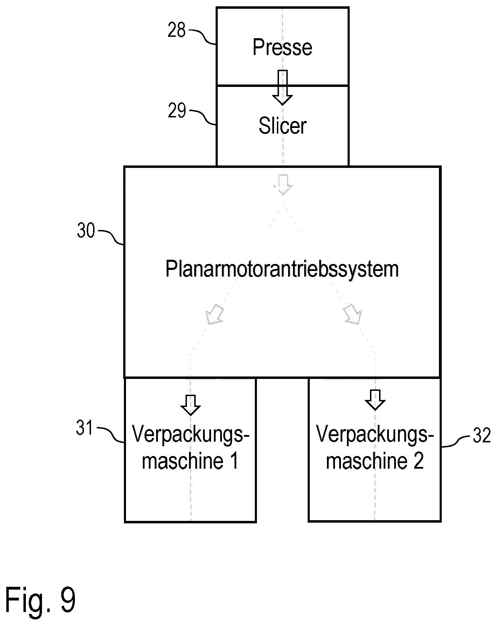

Figur 9 zeigt eine schematische Darstellung einer erfindungsgemäßen Nahrungsmittelverarbeitung Anlage mit einer Presse 28, welche die Nahrungsmittelprodukte zunächst presst, was beispielsweise bei tiefgekühlten Produkten sinnvoll sein kann und an sich aus dem Stand der Technik bekannt ist.

Die Presse 28 liefert die gepressten Nahrungsmittelprodukte dann an eine Schneideinrichtung 29 ("Slicer"), die hier einspurig arbeitet.

Die Schneideinrichtung 29 übergibt die Nahrungsmittelportionen aus mehreren Scheiben dann an ein Planarmotorantriebssystem 30, wie es vorstehend bereits beschrieben wurde, wobei das Planarmotorantriebssystem 30 jeweils Fördergutträger mit den einzelnen Nahrungsmittelportionen bewegt.

Ausgangsseitig beschickt das Planarmotorantriebssystem 30 dann zwei Verpackungsmaschinen 31, 32. Das Planarmotorantriebssystem 30 ermöglicht hierbei also die Beschickung von zwei Verpackungsmaschinen 31, 32 durch nur eine einzige Schneideinrichtung 29.

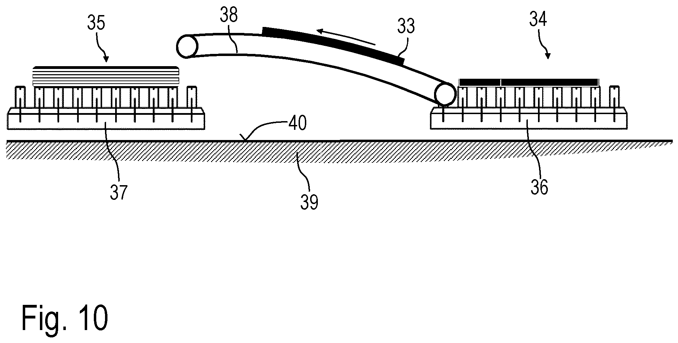

Figur 10 zeigt schließlich eine schematische Darstellung zum Transferieren von einzelnen Scheiben 33 zwischen zwei Nahrungsmittelportionen 34, 35, die auf zwei Fördergutträgern 36, 37 liegen. In dem dargestellten Ausführungsbeispiel ist die Nahrungsmittelportion 35 auf dem Fördergutträger 37 nicht vollständig, weshalb die Scheibe 33 von der Nahrungsmittelportion 34 entnommen und zur Komplettierung auf der Nahrungsmittelportion 35 abgelegt wird. Zum Transferieren der Scheibe 33 zwischen den beiden Fördergutträgern 36, 37 ist hierbei ein Förderer 38 vorgesehen, der eingangsseitig mehrere schmale Fingerförderer aufweist, die in die langgestreckten Vertiefungen zwischen den benachbarten Stiften eintauchen können, um die Nahrungsmittelportion 34 zu untergreifen, wie vorstehend bereits beschrieben wurde. Die Zeichnung ist hierbei nur schematisch, um das Prinzip des Transfers der Scheiben 33 zwischen den Fördergutträgern 36, 37 zu verdeutlichen. Weiterhin ist zu erwähnen, dass die Fördergutträger 35, 36 hierbei auf einem Planarmotorantriebssystem 39 innerhalb einer horizontalen Förderfläche 40 frei bewegt werden können.

### Bezugszeichenliste:

- 1: Schneideinrichtung ("Slicer")
- 2: Abgabeförderer
- 3: Fördergutträger
- 4: Planarmotorantriebssystem zum Antrieb der Fördergutträger
- 5: Module des Planarmotorantriebssystem
- 6: Nahrungsmittelportion auf dem Fördergutträger
- 7: Prüfstation mit Kameras zum Prüfen der Nahrungsmittelportionen
- 8: Steuereinrichtung
- 9: Korrekturstation
- 10: Entsorgungsstation
- 11: Abnahmeförderer
- 12: Verpackungsmaschine
- 13: Stifte an der Oberseite des Fördergutträger
- 14, 15: Langgestreckte Vertiefungen zwischen den Stiften
- 16: Schwenkachse des Abnahmeförderers
- 17: Kamera
- 18, 19: Nahrungsmittelportionen
- 20, 21: Fördergutträger
- 22, 23: Förderspuren
- 24: Bandförderer
- 25: Abnahmeförderer
- 26: Zwischenförderer
- 27: Abgabeförderer
- 28: Presse
- 29: Schneideinrichtung ("Slicer")
- 30: Planarmotorantriebssystem zum Antrieb der Fördergutträger
- 31, 32: Verpackungsmaschinen
- 33: Scheibe
- 34, 35: Nahrungsmittelportionen
- 36, 37: Fördergutträger
- 38: Transfer-Förderer
- 39: Planarmotorantriebssystem
- 40: Förderfläche des Planarmotorantriebssystems

## Patentansprüche

1. Nahrungsmittelverarbeitungsanlage zur Verarbeitung von Nahrungsmittelprodukten, insbesondere zum Aufschneiden von Fleischstücken, Käsestücken, Wurst-Stangen oder Salami-Stangen in Scheiben (33), mit
a) einer Schneideinrichtung (1; 29) zum Aufschneiden der Nahrungsmittelprodukte in Scheiben (33) zur Bildung von Nahrungsmittelportionen (6; 18, 19; 34, 35), die jeweils aus einer oder mehreren Scheiben (33) bestehen, und
b) einer Förderanlage (4; 30; 39) zum Fördern der Nahrungsmittelportionen (6; 18, 19; 34, 35) weg von der Schneideinrichtung (1; 29) entlang einem Hauptförderweg, wobei die Förderanlage (4; 30; 39) in der Nahrungsmittelverarbeitungsanlage mehrere der folgenden Funktionen erfüllt:
b1) Puffern der von der Schneideinrichtung (1; 29) angelieferten Nahrungsmittelportionen (6; 18, 19; 34, 35) in einer Pufferzone auf der Förderanlage (4; 30; 39) vor einem Weitertransport der Nahrungsmittelportionen (6; 18, 19; 34, 35) entlang dem Hauptförderweg,
b2) Ausrichtung der Nahrungsmittelportionen (6; 18, 19; 34, 35) in lateraler Richtung quer zu dem Hauptförderweg durch eine Verschiebung der Nahrungsmittelportionen (6; 18, 19; 34, 35) in lateraler Richtung quer zu dem Hauptförderweg,
b3) Orientierung der Nahrungsmittelportionen (6; 18, 19; 34, 35) relativ zu dem Hauptförderweg durch eine Drehung der Nahrungsmittelportionen (6; 18, 19; 34, 35) relativ zu dem Hauptförderweg,
b4) Produktformatierung von einem eingangsseitig einlaufenden Produktformat mit einer vorgegebenen Anzahl von parallelen Förderspuren in ein ausgangseitig auslaufendes Produktformat mit einer vorgegebenen Anzahl von parallelen Förderspuren, wobei die Anzahl der eingangsseitig einlaufenden Förderspuren anders ist als die Anzahl der ausgangsseitigen auslaufenden Förderspuren,
b5) wobei die Förderanlage (4; 30; 39) die mehreren Funktionen mittels eines Unstetigförderers (4; 30; 39) erfüllt, wobei der Unstetigförderer (4; 30; 39) mindestens einen Fördergutträger (3; 20, 21; 36, 37) aufweist, der entlang dem Hauptförderweg bewegbar ist, wobei der Hauptförderweg innerhalb einer Förderfläche (40) frei programmierbar ist,
**gekennzeichnet durch**
c) eine Prüfstation (7) zur Prüfung der von der Förderanlage (4; 30; 39) geförderten Nahrungsmittelportionen (6; 18, 19; 34, 35) auf die Einhaltung vorgegebener Produktspezifikationen und zur Ermittlung von Fehlportionen unter den Nahrungsmittelportionen (6; 18, 19; 34, 35), die den vorgegebenen Produktspezifikationen nicht genügen, wobei die Prüfstation (7) optional zwischen der Schneideinrichtung (1; 29) und der Förderanlage (4; 30; 39) angeordnet ist, und
d) eine Ausschleusungsstation zum Ausschleusen der Fehlportionen aus dem Hauptförderweg,
e) wobei die Prüfstation (7)
e1) die Nahrungsmittelportionen (6; 18, 19; 34, 35) wiegt und das Gewicht der Nahrungsmittelportionen (6; 18, 19; 34, 35) mit einem vorgegebenen Soll-Gewicht vergleicht, um die Fehlportionen zu ermitteln, und/oder
e2) die Nahrungsmittelportionen (6; 18, 19; 34, 35) zur Erkennung von Fehlstellen mittels eines Sensors, insbesondere mittels einer Kamera, optisch untersucht und die untersuchten Nahrungsmittelportionen (6; 18, 19; 34, 35) in Abhängigkeit von den ermittelten Fehlstellen als Fehlportionen einordnet, wobei die Fehlstellen optional Gewichtsabweichungen, Volumenabweichungen, Formabweichungen oder Qualitätsabweichungen sind.

2. Nahrungsmittelverarbeitungsanlage nach Anspruch 1, **dadurch gekennzeichnet,**
a) **dass** die Ausschleusungsstation die Fehlportionen in eine Korrekturzone (9) ausschleust, in der die Fehlportionen manuell oder automatisch korrigiert werden können, und
b) **dass** die Ausschleusungsstation die korrigierten Fehlportionen nach ihrer Korrektur in der Korrekturzone (9) wieder aus der Korrekturzone (9) in den Hauptförderweg einschleust.

3. Nahrungsmittelverarbeitungsanlage nach einem der vorhergehenden Ansprüche,
**dadurch gekennzeichnet,**
a) **dass** die Schneideinrichtung (1; 29) bei einem Schneidvorgang eines der Nahrungsmittelprodukte jeweils ein Anfangsstück und ein Endstück erzeugt, wobei das Anfangsstück und/oder das Endstück nicht verwertbar sind und optional jeweils aus einer oder mehreren Scheiben (33) bestehen, und
b) **dass** die Förderanlage (4; 30; 39) auch das Anfangsstück und/oder das Endstück auf einem der Fördergutträger (3; 20, 21; 36, 37) von der Schneideinrichtung (1; 29) übernimmt, und
c) **dass** die Förderanlage (4; 30; 39) eine Entsorgungsstation (10) aufweist, um das nicht verwertbare Anfangsstück und/oder das nicht verwertbare Endstück von dem Fördergutträger (3; 20, 21; 36, 37) abzunehmen und zu entsorgen.

4. Nahrungsmittelverarbeitungsanlage nach Anspruch 3, **dadurch gekennzeichnet, dass** die Entsorgungsstation (10) zur Abnahme des nicht verwertbaren Anfangsstücks und/oder des nicht verwertbaren Endstücks von dem Fördergutträger (3; 20, 21; 36, 37) folgendes aufweist:
a) einen Greifer zum Greifen des Anfangsstücks und/oder des Endstücks auf dem Fördergutträger (3; 20, 21; 36, 37), wobei der Greifer vorzugweise von einem Roboter geführt wird, oder
b) einen Sauger zum Ansaugen des Anfangsstücks und/oder des Endstücks auf dem Fördergutträger (3; 20, 21; 36, 37), wobei der Sauger vorzugweise von einem Roboter geführt wird, oder
c) einen beweglich geführten Schieber zum Herunterschieben des Anfangsstücks und/oder des Endstücks von dem Fördergutträger (3; 20, 21; 36, 37), oder
d) eine Kippeinrichtung zum Kippen des Fördergutträgers (3; 20, 21; 36, 37) mit dem darauf befindlichen Anfangsstück und/oder Endstück und zum Herunterkippen des Anfangsstücks und/oder des Endstücks von dem Fördergutträger (3; 20, 21; 36, 37), oder
e) eine Blaseinrichtung zum Herunterblasen des Anfangsstücks und/oder des Endstücks von dem Fördergutträger (3; 20, 21; 36, 37), oder
f) eine Einrichtung zum ruckartigen Beschleunigen und/oder Abbremsen des Fördergutträgers (3; 20, 21; 36, 37), damit die nicht verwertbaren Endstücke von dem Fördergutträger (3; 20, 21; 36, 37) herunterrutschen, oder
g) ein Finderförderband.

5. Nahrungsmittelverarbeitungsanlage nach einem der vorhergehenden Ansprüche,
**dadurch gekennzeichnet,**
a) **dass** die Förderanlage (4; 30; 39) eine Dreheinrichtung aufweist, um den mindestens einen Fördergutträger (3; 20, 21; 36, 37) um eine Drehachse rechtwinklig zu der Förderfläche (40) zu drehen, damit eine vorgegebene Orientierung der Nahrungsmittelportion (6; 18, 19; 34, 35) auf dem Fördergutträger (3; 20, 21; 36, 37) eingestellt wird,
b) **dass** die Dreheinrichtung optional durch den Unstetigförderer (4; 30; 39) gebildet wird,
c) **dass** die Förderanlage (4; 30; 39) optional einen Sensor, insbesondere eine Kamera (17), aufweist, um die Orientierung der Nahrungsmittelportionen (6; 18, 19; 34, 35) auf den Fördergutträgern zu erfassen.
d) **dass** die Förderanlage (4; 30; 39) optional eine Steuereinrichtung (8) aufweist, die eingangsseitig mit der Kamera (17) verbunden ist und ausgangsseitig mit der Dreheinrichtung verbunden ist und die Dreheinrichtung in Abhängigkeit von der ermittelten Orientierung der Nahrungsmittelportion (6; 18, 19; 34, 35) ansteuert,
e) **dass** die Kamera (17) optional in dem Hauptförderweg weiter stromabwärts angeordnet ist als die Dreheinrichtung,
f) **dass** die Dreheinrichtung optional direkt an der Schneideinrichtung (1; 29) angeordnet ist, so dass die von der Schneideinrichtung (1; 29) abgeschnittenen Scheiben (33) auf dem Fördergutträger (3; 20, 21; 36, 37) abgelegt werden, der von der Dreheinrichtung in eine gewünschte Orientierung gedreht wird.

6. Nahrungsmittelverarbeitungsanlage nach einem der vorhergehenden Ansprüche,
**dadurch gekennzeichnet,**
a) **dass** über der Förderfläche (40) des Unstetigförderers (4; 30; 39) ein Bandförderer (24) mit einer bestimmten Förderrichtung angeordnet ist,
b) **dass** der Unstetigförderer (4; 30; 39) einen ersten Fördergutträger (3; 20, 21; 36, 37) mit einer ersten Nahrungsmittelportion (6; 18, 19; 34, 35) anliefert, die von dem Bandförderer (24) übernommen wird,
c) **dass** der Unstetigförderer (4; 30; 39) einen zweiten Fördergutträger (3; 20, 21; 36, 37) mit einer zweiten Nahrungsmittelportion (6; 18, 19; 34, 35) anliefert und den zweiten Fördergutträger (3; 20, 21; 36, 37) auf der Förderfläche (40) unter dem Bandförderer positioniert,
d) **dass** der Unstetigförderer (4; 30; 39) des zweiten Fördergutträger (3; 20, 21; 36, 37) in der Förderrichtung des Bandförderers (24) unter dem Bandförderer (24) herausbewegt, wobei der Bandförderer (24) das erste Nahrungsmittelprodukt mit einer zumindest teilweisen Überlappung auf dem zweiten Nahrungsmittelprodukt ablegt, das auf dem zweiten Fördergutträger (3; 20, 21; 36, 37) liegt.
e) **dass** optional eine Steuereinrichtung (8) den Unstetigförderer (4; 30; 39) und den Bandförderer (24) zur Durchführung der Schritte b) bis d) ansteuert.

7. Nahrungsmittelverarbeitungsanlage nach einem der vorhergehenden Ansprüche,
**dadurch gekennzeichnet,**
a) **dass** die Förderanlage (4; 30; 39) eine Transfereinrichtung (38) aufweist zum Transferieren von Scheiben (33) der Nahrungsmittelportionen (6; 18, 19; 34, 35) zwischen verschiedenen Fördergutträgern zur Zusammenstellung von vollständigen Nahrungsmittelportionen (6; 18, 19; 34, 35) aus mehreren unvollständigen Nahrungsmittelportionen (6; 18, 19; 34, 35),
b) **dass** die Transfereinrichtung (38) optional ein Bandförderer ist.

8. Nahrungsmittelverarbeitungsanlage nach einem der vorhergehenden Ansprüche,
**dadurch gekennzeichnet,**
a) **dass** die Nahrungsmittelverarbeitungsanlage eine bestimmte Anzahl von Schneideinrichtungen (1; 29) aufweist, die jeweils mindestens einen Förderstrom der Nahrungsmittelportionen (6; 18, 19; 34, 35) liefern, wobei die Anzahl der Schneideinrichtungen (1; 29) größer oder gleich eins ist,
b) **dass** die Nahrungsmittelverarbeitungsanlage eine bestimmte Anzahl von Verpackungsmaschinen (12; 31, 32) aufweist, die jeweils einen Förderstrom der Nahrungsmittelportionen (6; 18, 19; 34, 35) aufnehmen und die in dem Förderstrom angelieferte Nahrungsmittelportionen (6; 18, 19; 34, 35) in Verpackungen verpacken, wobei die Anzahl der Verpackungsmaschinen (12; 31, 32) größer oder gleich eins ist,

9. Nahrungsmittelverarbeitungsanlage nach Anspruch 8, **dadurch gekennzeichnet,**
a) **dass** die Anzahl der Schneideinrichtungen (1; 29) anders ist als die Anzahl der Verpackungsmaschinen (12; 31, 32),
b) **dass** die Förderanlage (4; 30; 39)
b1) die eingangsseitig von der mindestens einen Schneideinrichtung (1; 29) einlaufenden Förderströme in mehrere ausgangsseitige Förderströme zur Beschickung der einzelnen Verpackungsmaschinen (12; 31, 32) aufteilt, oder
b2) die eingangsseitig von den mehreren Schneideinrichtungen (1; 29) einlaufenden mehreren Förderströme in mindestens einen Förderstrom zur Beschickung der mindestens einen Verpackungsmaschinen (12; 31, 32) zusammenführt.

10. Nahrungsmittelverarbeitungsanlage nach Anspruch 7 oder 8, **dadurch gekennzeichnet, dass** die Förderanlage (4; 30; 39) beladene Fördergutträger (3; 20, 21; 36, 37) zwischen den verschiedenen Förderströmen transferiert.

11. Nahrungsmittelverarbeitungsanlage nach einem der vorhergehenden Ansprüche,
**dadurch gekennzeichnet**
a) **dass** die Nahrungsmittelverarbeitungsanlage eine Steuereinrichtung (8) aufweist, die den Betrieb der Nahrungsmittelverarbeitungsanlage steuert,
b) **dass** die Steuereinrichtung (8) mit mindestens einer der folgenden Komponenten der Nahrungsmittelverarbeitungsanlage verbunden ist, um den Betrieb der Nahrungsmittelverarbeitungsanlage zu steuern:
b1) dem Unstetigförderer (4; 30; 39)
b2) der Schneideinrichtung (1; 29),
b3) der Prüfstation (7),
b4) der Ausschleusungsstation,
b5) der Entsorgungsstation (10),
b6) der Kamera (17),
b7) der Transfereinrichtung (38),
b8) der Verpackungsmaschine (12; 31, 32),
b9) dem Abgabeförderer (2),
b10) dem Abnahmeförderer 811).
c) **dass** die Steuereinrichtung (8) einen Steuerrechner und einen Programmspeicher enthält, in dem ein Steuerprogramm gespeichert ist, wobei das Steuerprogramm bei einer Ausführung den Steuerrechner veranlasst, die Nahrungsmittelverarbeitungsanlage gemäß einem der vorhergehenden Ansprüche anzusteuern.

## Claims

1. Food-processing system for processing food products, in particular for slicing pieces of meat, pieces of cheese, sausage sticks or salami sticks into slices (33), comprising
a) a cutting device (1; 29) for cutting the food products into slices (33) to form food product portions (6; 18, 19; 34, 35) each consisting of one or more slices (33), and
b) a conveyor system (4; 30; 39) for conveying the food product portions (6; 18, 19; 34, 35) away from the cutting device (1; 29) along a main conveying path, wherein the conveyor system (4; 30; 39) performs several of the following functions in the food-processing system:
b1) buffering the food product portions (6; 18, 19; 34, 35) delivered from the cutting device (1; 29) in a buffer zone on the conveyor system (4; 30; 39) prior to further transport of the food product portions (6; 18, 19; 34, 35) along the main conveyor path,
b2) aligning of the food product portions (6; 18, 19; 34, 35) in lateral direction transversely to the main conveying path by a displacement of the food product portions (6; 18, 19; 34, 35) in lateral direction transversely to the main conveying path,
b3) orientation of the food product portions (6; 18, 19; 34, 35) relative to the main conveying path by a rotation of the food product portions (6; 18, 19; 34, 35) relative to the main conveying path,
b4) product formatting from an incoming product format with a predetermined number of parallel conveyor tracks into an outgoing product format with a predetermined number of parallel conveyor tracks, wherein the number of incoming conveyor tracks is different from the number of outgoing conveyor tracks,
b5) wherein the conveyor system (4; 30; 39) fulfills said plurality of functions by means of a discontinuous conveyor (4; 30; 39), said discontinuous conveyor (4; 30; 39) comprising at least one conveyed-products carrier (3; 20, 21; 36, 37) movable along said main conveying path, said main conveying path being freely programmable within a conveying surface (40),
**characterized by**
c) a checking station (7) for checking the food product portions (6; 18, 19; 34, 35) conveyed by the conveyor system (4; 30; 39) for compliance with predetermined product specifications and for detecting faulty portions among the food product portions (6; 18, 19; 34, 35) that do not meet the predetermined product specifications, the checking station (7) optionally being arranged between the cutting device (1; 29) and the conveyor system (4; 30; 39), and
d) an ejection station for ejecting the faulty portions from the main conveying path,
e) wherein the checking station (7)
e1) weighs the food product portions (6; 18, 19; 34, 35) and compares the weight of the food product portions (6; 18, 19; 34, 35) with a predetermined target weight to determine the faulty portions, and/or
e2) checks the food product portions (6; 18, 19; 34, 35) by means of a sensor, in particular by means of a camera, in order to detect defects, and classifies the checked food product portions (6; 18, 19; 34, 35) as faulty portions as a function of the defects determined, the defects optionally being deviations in weight, deviations in volume, deviations in shape or deviations in quality.

2. Food-processing system according to claim 1, **characterized in,**
a) **that** the ejection station discharges the faulty portions into a correction zone (9) in which the faulty portions can be corrected manually or automatically, and
b) **that** the ejection station reintroduces the corrected faulty portions from the correction zone (9) into the main conveying path after they have been corrected in the correction zone (9).

3. Food-processing system according to any one of the preceding claims, **characterized in,**
a) **that** the cutting device (1; 29) produces, during a cutting operation of one of the food products, in each case an initial piece and an end piece, the initial piece and/or the end piece being non-recyclable and optionally consisting in each case of one or more slices (33), and
b) **that** the conveying system (4; 30; 39) also takes over the initial piece and/or the end piece on one of the conveyed-products carriers (3; 20, 21; 36, 37) from the cutting device (1; 29), and
c) **that** the conveyor system (4; 30; 39) comprises a discharge station (10) for removing the non-usable initial piece and/or the non-usable end piece from the conveyed-products carrier (3; 20, 21; 36, 37) and disposing of it.

4. Food-processing system according to claim 3, **characterized in that** the discharge station (10) for removing the non-usable initial piece and/or the non-usable end piece from the conveyed-products carrier (3; 20, 21; 36, 37) comprises:
a) a gripper for gripping the initial piece and/or the end piece on the conveyed-products carrier (3; 20, 21; 36, 37), the gripper preferably being guided by a robot, or
b) a suction device for sucking the initial piece and/or the end piece onto the conveyor support (3; 20, 21; 36, 37), the suction device preferably being guided by a robot, or
c) a movably guided pusher for pushing the initial piece and/or the end piece down from the conveyed-products carrier (3; 20, 21; 36, 37), or
d) a tilting device for tilting the conveyed-products carrier (3; 20, 21; 36, 37) with the initial piece and/or end piece located thereon and for tilting the initial piece and/or end piece down from the conveyed-products carrier (3; 20, 21; 36, 37), or
e) a blowing device for blowing down the initial piece and/or the end piece from the conveyed-products carrier (3; 20, 21; 36, 37), or
f) a device for jerkily accelerating and/or braking the conveyed-products carrier (3; 20, 21; 36, 37) so that the non-usable end pieces slide off the conveyed-products carrier (3; 20, 21; 36, 37), or
g) a finger conveyor belt.

5. Food-processing system according to any one of the preceding claims, **characterized in**
a) **that** the conveyor system (4; 30; 39) comprises a rotating device for rotating the at least one conveyed-products carrier (3; 20, 21; 36, 37) about an axis of rotation at right angles to the conveying surface (40) in order to set a predetermined orientation of the food product portion (6; 18, 19; 34, 35) on the conveyed-products carrier (3; 20, 21; 36, 37),
b) **that** the rotating device is optionally formed by the discontinuous conveyor (4; 30; 39),
c) **that** the conveyor system (4; 30; 39) optionally comprises a sensor, in particular a camera (17), for detecting the orientation of the food product portions (6; 18, 19; 34, 35) on the conveyed-products carriers.
d) **that** the conveyor system (4; 30; 39) optionally comprises a control device (8) which is connected on the input side to the camera (17) and on the output side to the rotating device and controls the rotating device as a function of the determined orientation of the food product portion (6; 18, 19; 34, 35),
e) **that** the camera (17) is optionally arranged further downstream in the main conveying path than the rotating device,
f) **that** the rotating device is optionally arranged directly on the cutting device (1; 29), so that the slices (33) cut off by the cutting device (1; 29) are deposited on the conveyed food product portion carrier (3; 20, 21; 36, 37), which is rotated by the rotating device into a desired orientation.

6. Food-processing system according to any one of the preceding claims, **characterized in**
a) **that** a belt conveyor (24) with a specific conveying direction is arranged above the conveying surface (40) of the discontinuous conveyor (4; 30; 39),
b) **that** the discontinuous conveyor (4; 30; 39) delivers a first conveyed-products carrier (3; 20, 21; 36, 37) with a first food product portion (6; 18, 19; 34, 35) which is taken over by the belt conveyor (24),
c) **that** the discontinuous conveyor (4; 30; 39) delivers a second conveyed-products carrier (3; 20, 21; 36, 37) with a second food product portion (6; 18, 19; 34, 35) and positions the second conveyed-products carrier (3; 20, 21; 36, 37) on the conveying surface (40) under the belt conveyor,
d) **that** the discontinuous conveyor (4; 30; 39) moves the second conveyed-products carrier (3; 20, 21; 36, 37) out from under the belt conveyor (24) in the conveying direction of the belt conveyor (24), whereby the belt conveyor (24) deposits the first food product with an at least partial overlap on the second food product lying on the second conveyed-products carrier (3; 20, 21; 36, 37).
e) **that** optionally a control device (8) controls the discontinuous conveyor (4; 30; 39) and the belt conveyor (24) for carrying out steps b) to d).

7. Food-processing system according to one of the preceding claims, **characterized in**
a) **that** the conveyor system (4; 30; 39) comprises a transfer device (38) for transferring slices (33) of the food product portions (6; 18, 19; 34, 35) between different conveyed-products carriers for assembling complete food product portions (6; 18, 19; 34, 35) from several incomplete food product portions (6; 18, 19; 34, 35),
b) **that** the transfer device (38) is optionally a belt conveyor.

8. Food-processing system according to any one of the preceding claims, **characterized in,**
a) **that** the food-processing system comprises a certain number of cutting devices (1; 29), each supplying at least one conveying stream of the food product portions (6; 18, 19; 34, 35), the number of cutting devices (1; 29) being greater than or equal to one,
b) **that** the food-processing system comprises a certain number of packaging machines (12; 31, 32), each receiving a delivery stream of the food product portions (6; 18, 19; 34, 35) and packaging the food product portions (6; 18, 19; 34, 35) delivered in the delivery stream into packages, the number of packaging machines (12; 31, 32) being greater than or equal to one,

9. Food-processing system according to claim 8, **characterized in,**
a) **that** the number of the cutting devices (1; 29) is different from the number of the packaging machines (12; 31, 32),
b) **that** the conveyor system (4; 30; 39)
b1) divides the conveying streams arriving on the input side from the at least one cutting device (1; 29) into a plurality of conveying streams on the output side for feeding the individual packaging machines (12; 31, 32), or
b2) combines the multiple conveying streams incoming on the input side from the multiple cutting devices (1; 29) into at least one conveying stream for feeding the at least one packaging machines (12; 31, 32).

10. Food-processing system according to claim 7 or 8, **characterized in that** the conveyor system (4; 30; 39) transfers loaded conveyed-products carriers (3; 20, 21; 36, 37) between the different conveyor streams.

11. Food-processing system according to one of the preceding claims, **characterized in**
a) **that** the food-processing system comprises a control device (8) which controls the operation of the food-processing system,
b) **that** the control device (8) is connected to at least one of the following components of the food-processing system for controlling the operation of the food-processing system:
b1) the discontinuous conveyor (4; 30; 39)
b2) the cutting device (1; 29),
b3) the checking station (7),
b4) the ejection station,
b5) the discharge station (10),
b6) the camera (17),
b7) the transfer device (38),
b8) the packaging machine (12; 31, 32),
b9) the delivery conveyor (2),
b10) the take-off conveyor (811).
c) **that** the control device (8) includes a control computer and a program memory in which a control program is stored, the control program, when executed, causing the control computer to control the food-processing system in accordance with one of the preceding claims.

## Revendications

1. Installation de transformation d'aliments destinée à la transformation de produits alimentaires, en particulier pour découper des morceaux de viande, des morceaux de fromage, des bâtonnets de saucisse ou des bâtonnets de salami en tranches (33), avec
a) un dispositif de coupe (1 ; 29) pour découper les produits alimentaires en tranches (33) pour former des portions d'aliment (6 ; 18, 19 ; 34, 35), qui sont constituées chacune d'une ou de plusieurs tranches (33), et
b) une installation de convoyage (4 ; 30 ; 39) pour convoyer les portions d'aliment (6 ; 18, 19 ; 34, 35) à l'écart du dispositif de coupe (1 ; 29) le long d'un trajet principal de convoyage, dans laquelle l'installation de convoyage (4 ; 30 ; 39) dans l'installation de transformation d'aliments remplit plusieurs des fonctions suivantes :
b1) mise en tampon des portions d'aliment (6 ; 18, 19 ; 34, 35) fournies par le dispositif de coupe (1 ; 29) dans une zone de mise en tampon sur l'installation de convoyage (4 ; 30 ; 39) avant un transport ultérieur des portions d'aliment (6 ; 18, 19 ; 34, 35) le long du trajet principal de convoyage,
b2) alignement des portions d'aliment (6 ; 18, 19 ; 34, 35) dans la direction latérale perpendiculairement au trajet principal de convoyage par un déplacement des portions d'aliment (6 ; 18, 19 ; 34, 35) dans la direction latérale transversalement à la voie de convoyage principale,
b3) orientation des portions d'aliment (6 ; 18, 19 ; 34, 35) par rapport au trajet principal de convoyage par une rotation des portions d'aliment (6 ; 18, 19 ; 34, 35) par rapport à la voie de convoyage principale,
b4) formatage de produit d'un format de produit entrant côté entrée avec un nombre prédéfini de voies de convoyage parallèles en un format de produit sortant côté sortie avec un nombre prédéfini de voies de convoyage parallèles, dans laquelle le nombre de voies de convoyage entrant côté entrée est différent du nombre de voies de convoyage sortant côté sortie,
b5) dans laquelle l'installation de convoyage (4 ; 30 ; 39) remplit les plusieurs fonctions au moyen d'un convoyeur discontinu (4 ; 30 ; 39), dans laquelle le convoyeur discontinu (4 ; 30 ; 39) présente au moins un support de marchandises à convoyer (3 ; 20, 21 ; 36, 37) qui peut être déplacé le long du trajet principal de convoyage, dans laquelle le trajet principal de convoyage est librement programmable à l'intérieur d'une surface de convoyage (40),
**caractérisée par**
c) une station de contrôle (7) destinée à contrôler la conformité des portions d'aliment (6 ; 18, 19 ; 34, 35) convoyées par l'installation de convoyage (4 ; 30 ; 39) aux spécifications de produit prédéfinies et destinée à déterminer des portions non conformes parmi les portions d'aliment (6 ; 18, 19 ; 34, 35) qui ne respectent pas les spécifications de produit prédéfinies, dans laquelle la station de contrôle (7) est disposée en option entre le dispositif de coupe (1 ; 29) et l'installation de convoyage (4 ; 30 ; 39), et
d) une station d'évacuation destinée à évacuer les portions non conformes du trajet principal de convoyage,
e) dans laquelle la station de contrôle (7)
e1) pèse les portions d'aliment (6 ; 18, 19 ; 34, 35) et compare le poids des portions d'aliment (6 ; 18, 19 ; 34, 35) à un poids de consigne prédéfini pour déterminer les portions non conformes, et/ou
e2) examine optiquement les portions d'aliment (6 ; 18, 19 ; 34, 35) pour identifier des défauts au moyen d'un capteur, en particulier au moyen d'une caméra, et classe les portions d'aliment (6 ; 18, 19 ; 34, 35) examinées comme étant des portions non conformes en fonction des défauts déterminés, dans laquelle les défauts sont en option des écarts de poids, des écarts de volume, des écarts de forme ou des écarts de qualité.

2. Installation de transformation d'aliments selon la revendication 1, **caractérisée en ce**
a) **que** la station d'évacuation évacue les portions non conformes dans une zone de correction (9) dans laquelle les portions non conformes peuvent être corrigées manuellement ou automatiquement, et
b) **que** la station d'évacuation réintroduit les portions non conformes corrigées de la zone de correction (9) dans le trajet principal de convoyage après leur correction dans la zone de correction (9).

3. Installation de transformation d'aliments selon l'une quelconque des revendications précédentes,
**caractérisée en ce**
a) **que** le dispositif de coupe (1 ; 29) génère respectivement une pièce de départ et une pièce finale lors d'un processus de coupe d'un des produits alimentaires, dans laquelle la pièce de départ et/ou la pièce finale ne sont pas valorisables et sont constituées en option respectivement d'une ou de plusieurs tranches (33), et
b) **que** l'installation de convoyage (4 ; 30 ; 39) prend en charge du dispositif de coupe (1 ; 29) également la pièce de départ et/ou la pièce finale sur un des supports de marchandises à convoyer (3 ; 20, 21 ; 36, 37), et
c) **que** l'installation de convoyage (4 ; 30 ; 39) présente une station d'élimination (10) pour retirer et éliminer la pièce de départ non valorisable et/ou la pièce finale non valorisable du support de marchandises à convoyer (3 ; 20, 21 ; 36, 37).

4. Installation de transformation d'aliments selon la revendication 3, **caractérisée en ce que** la station d'élimination (10) destinée à retirer la pièce de départ non valorisable et/ou de la pièce finale non valorisable du support de marchandises à convoyer (3 ; 20, 21 ; 36, 37) présente ce qui suit :
a) un système de préhension pour saisir la pièce de départ et/ou la pièce finale sur le support de marchandises à convoyer (3 ; 20, 21 ; 36, 37), dans laquelle le système de préhension est de préférence guidé par un robot, ou
b) un aspirateur destiné à aspirer la pièce de départ et/ou la pièce finale sur le support de marchandises à convoyer (3 ; 20, 21 ; 36, 37), dans laquelle l'aspirateur est de préférence guidé par un robot, ou
c) un poussoir guidé de manière mobile destiné à pousser la pièce de départ et/ou la pièce finale vers le bas du support de marchandises à convoyer (3 ; 20, 21 ; 36, 37), ou
d) un dispositif de basculement destiné à faire basculer le support de marchandises à convoyer (3 ; 20, 21 ; 36, 37) avec la pièce de départ et/ou la pièce finale se trouvant dessus et destiné à faire basculer la pièce de départ et/ou la pièce finale vers le bas du support de marchandises à convoyer (3 ; 20, 21 ; 36, 37), ou
e) un dispositif de soufflage destiné à souffler la pièce de départ et/ou la pièce finale vers le bas du support de marchandises à convoyer (3 ; 20, 21 ; 36, 37), ou
f) un dispositif d'accélération et/ou de freinage brusque du support de marchandises à convoyer (3 ; 20, 21 ; 36, 37) afin que les pièces finales non valorisables glissent du support de marchandises à convoyer (3 ; 20, 21 ; 36, 37), ou
g) une bande transporteuse de recherche.

5. Installation de transformation d'aliments selon l'une quelconque des revendications précédentes,
**caractérisée en ce**
a) **que** l'installation de convoyage (4 ; 30 ; 39) présente un dispositif de rotation permettant de faire tourner l'au moins un support de marchandises à convoyer (3 ; 20, 21 ; 36, 37) autour d'un axe de rotation à angle droit par rapport à la surface de convoyage (40), afin de régler une orientation prédéfinie des portions d'aliment (6 ; 18, 19 ; 34, 35) sur le support de marchandises à convoyer (3 ; 20, 21 ; 36, 37),
b) **que** le dispositif de rotation est formé en option par le convoyeur discontinu (4 ; 30 ; 39),
c) **que** l'installation de convoyage (4 ; 30 ; 39) présente en option un capteur, en particulier une caméra (17), pour détecter l'orientation des portions d'aliment (6 ; 18, 19 ; 34, 35) sur les supports de marchandises à convoyer,
d) **que** l'installation de convoyage (4 ; 30 ; 39) comprend en option un dispositif de commande (8) qui est raccordé côté entrée à la caméra (17) et côté sortie au dispositif de rotation, et qui pilote le dispositif de rotation en fonction de l'orientation déterminée de la portion d'aliment (6 ; 18, 19 ; 34, 35),
e) **que** la caméra (17) est disposée en option sur le trajet principal de convoyage plus en aval que le dispositif de rotation,
f) **que** le dispositif de rotation est disposé en option directement sur le dispositif de coupe (1 ; 29), de telle sorte que les tranches (33) découpées par le dispositif de coupe (1 ; 29) sont déposées sur le support de marchandises à convoyer (3 ; 20, 21 ; 36, 37) qui est tourné par le dispositif de rotation dans une orientation souhaitée.

6. Installation de transformation d'aliments selon l'une quelconque des revendications précédentes,
**caractérisée en ce**
a) **qu'**un convoyeur à bande (24) avec une direction de convoyage donnée est disposé au-dessus de la surface de convoyage (40) du convoyeur discontinu (4 ; 30 ; 39),
b) **que** le convoyeur discontinu (4 ; 30 ; 39) livre un premier support de marchandises à convoyer (3 ; 20, 21 ; 36, 37) avec une première portion d'aliment (6 ; 18, 19 ; 34, 35) qui est prise en charge par le convoyeur à bande (24),
c) **que** le convoyeur discontinu (4 ; 30 ; 39) livre un deuxième support de marchandises à convoyer (3 ; 20, 21 ; 36, 37) avec une deuxième portion d'aliment (6 ; 18, 19 ; 34, 35) et positionne le deuxième support de marchandises à convoyer (3 ; 20, 21 ; 36, 37) sur la surface de convoyage (40) sous le convoyeur à bande,
d) **que** le convoyeur discontinu (4 ; 30 ; 39) du deuxième support de marchandises à convoyer (3 ; 20, 21 ; 36, 37) se déplace vers l'extérieur dans la direction de convoyage du convoyeur à bande (24) sous le convoyeur à bande (24), dans laquelle le convoyeur à bande (24) dépose le premier produit alimentaire avec un chevauchement au moins partiel sur le deuxième produit alimentaire qui se trouve sur le deuxième support de marchandises à convoyer (3 ; 20, 21 ; 36, 37),
e) **qu'**en option, un dispositif de commande (8) pilote le convoyeur discontinu (4 ; 30 ; 39) et le convoyeur à bande (24) pour réaliser les étapes b) à d).

7. Installation de transformation d'aliments selon l'une quelconque des revendications précédentes,
**caractérisée en ce**
a) **que** l'installation de convoyage (4 ; 30 ; 39) présente un dispositif de transfert (38) pour transférer des tranches (33) des portions d'aliment (6 ; 18, 19 ; 34, 35) entre différents supports de marchandises à convoyer afin de composer des portions d'aliment complètes (6 ; 18, 19 ; 34, 35) à partir de plusieurs portions d'aliment incomplètes (6 ; 18, 19 ; 34, 35),
b) **que** le dispositif de transfert (38) est en option un convoyeur à bande.

8. Installation de transformation d'aliments selon l'une quelconque des revendications précédentes,
**caractérisée en ce**
a) **que** l'installation de transformation d'aliments présente un nombre donné de dispositifs de coupe (1 ; 29) qui fournissent chacun au moins un flux de convoyage des portions d'aliment (6 ; 18, 19 ; 34, 35), dans laquelle le nombre des dispositifs de coupe (1 ; 29) est supérieur ou égal à un,
b) **que** l'installation de transformation d'aliments présente un nombre donné de machines d'emballage (12 ; 31, 32) qui chacune reçoivent un flux de convoyage des portions d'aliment (6 ; 18, 19 ; 34, 35) et emballent les portions d'aliment (6 ; 18, 19 ; 34, 35) fournies dans le flux de convoyage dans des emballages, dans laquelle le nombre des machines d'emballage (12 ; 31, 32) est supérieur ou égal à un.

9. Installation de transformation d'aliments selon la revendication 8, **caractérisée en ce**
a) **que** le nombre des dispositifs de coupe (1 ; 29) est différent du nombre des machines d'emballage (12 ; 31, 32),
b) **que** l'installation de convoyage (4 ; 30 ; 39)
b1) divise les flux de convoyage entrant côté entrée de l'au moins un dispositif de coupe (1 ; 29) en plusieurs flux de convoyage côté sortie pour l'alimentation des diverses machines d'emballage (12 ; 31, 32), ou
b2) regroupe les plusieurs flux de convoyage entrant côté d'entrée des plusieurs dispositifs de coupe (1 ; 29) en au moins un flux de convoyage pour alimenter l'au moins une machine d'emballage (12 ; 31, 32).

10. Installation de transformation alimentaire selon la revendication 7 ou 8, **caractérisée en ce que** l'installation de convoyage (4 ; 30 ; 39) transfère des supports de marchandises à convoyer (3 ; 20, 21 ; 36, 37) chargés entre les différents flux de convoyage.

11. Installation de transformation d'aliments selon l'une quelconque des revendications précédentes,
**caractérisée en ce**
a) **que** l'installation de transformation d'aliments est équipée d'un dispositif de commande (8) qui commande le fonctionnement de l'installation de transformation d'aliments,
b) **que** le dispositif de commande (8) est relié à au moins un des composants suivants de l'installation de transformation d'aliments pour commander le fonctionnement de l'installation de transformation d'aliments :
b1) au convoyeur discontinu (4 ; 30 ; 39)
b2) au dispositif de coupe (1 ; 29),
b3) à la station de contrôle (7),
b4) à la station d'évacuation,
b5) à la station d'élimination (10),
b6) à la caméra (17),
b7) au dispositif de transfert (38),
b8) à la machine d'emballage (12 ; 31, 32),
b9) au convoyeur de sortie (2),
b10) au convoyeur de retrait (811),
c) **que** le dispositif de commande (8) renferme un calculateur de commande et une mémoire de programme dans laquelle un programme de commande est stocké, dans laquelle le programme de commande amène, lors d'une exécution, le calculateur de commande à piloter l'installation de transformation d'aliments selon l'une quelconque des revendications précédentes.
